(19) Europäisches Patentamt
European Patent Office
Office européen des brevets

(11) Veröffentlichungsnummer : **0 391 885 B1**

(12) **EUROPÄISCHE PATENTSCHRIFT**

(45) Veröffentlichungstag der Patentschrift :
**17.06.92 Patentblatt 92/25**

(51) Int. Cl.$^5$ : **B09B 1/00**

(21) Anmeldenummer : **90890082.2**

(22) Anmeldetag : **21.03.90**

(54) **Verfahren zur Entsorgung von Abfallstoffen.**

(30) Priorität : **03.04.89 AT 771/89**

(43) Veröffentlichungstag der Anmeldung :
**10.10.90 Patentblatt 90/41**

(45) Bekanntmachung des Hinweises auf die
Patenterteilung :
**17.06.92 Patentblatt 92/25**

(84) Benannte Vertragsstaaten :
**BE CH DE DK ES FR GB IT LI NL SE**

(56) Entgegenhaltungen :
**EP-A- 0 026 301**
**EP-A- 0 121 577**
**EP-A- 0 230 913**
**DE-A- 3 411 998**
**DE-A- 3 516 138**
**DE-A- 3 716 851**

(73) Patentinhaber : **STEYRERMÜHL Papierfabriks-**
**und Verlags-Aktiengesellschaft**
**Fabriksplatz 1**
**A-4662 Steyrermühl (AT)**
Patentinhaber : **SCA Laakirchen**
**Aktiengesellschaft**
**Schillerstrasse 5**
**A-4633 Laakirchen (AT)**

(72) Erfinder : **Jenisch, Viktor, Dr.**
**Mayburger Kai 4**
**A-5020 Salzburg (AT)**
Erfinder : **Baum, Peter, Dipl.-Ing.**
**Moosgasse 21**
**A-4810 Gmunden (AT)**
Erfinder : **Nagler, Erwin, Johannes, Dr.Ing.**
**Freygasse 40**
**A-4810 Gmunden (AT)**

(74) Vertreter : **Köhler-Pavlik, Johann, Dipl.-Ing.**
**Margaretenplatz 5**
**A-1050 Wien (AT)**

EP 0 391 885 B1

## Beschreibung

Die Erfindung betrifft ein Verfahren zur Entsorgung von Abfallstoffen in flüssigem, pulver-, granulat- oder kornförmigem Zustand durch Deponierung in geologischen Formationen.

In vielen Bereichen stellt sich heute das Problem, mit Abfallstoffen aus industriellen Prozessen oder auch dem öffentlichen Sektor umzugehen. Einerseits sind inerte Materialien, d.h. im allgemeinen für die Umwelt ungefährliche Stoffe, zu deponieren, was vielfach aufgrund deren großer Menge und dem nur beschränkt dafür verfügbaren Raum Schwierigkeiten verursacht. So fallen etwa bei einem großen Betrieb der Papierbranche ca 20.000 t an inerter Wirbelschichtasche pro Jahr an, die deponiert werden muß.

zum anderen gibt es in immer größerem Ausmaß Abfallstoffe, die wegen deren Belastung mit giftigen Materialien aufwendig entsorgt werden müssen, wobei jedoch trotzdem Auswirkungen auf die Umwelt nicht auszuschließen sind. Als Beispiel für diesen Bereich wären etwa die Abwasserflüssigkeiten aus Mülldeponien zu nennen, die unter Umständen sehr kritisch belastet sein können.

Daher wurde unter anderem auch die Endlagerung gefährlicher Stoffe in geeigneten Räumen unter Tage, insbesondere aufgelassenen Bergwerken oder Salzstöcken, vorgeschlagen. Zu diesem Zweck müssen diese Stoffe in sicheren Behältern unter großem Aufwand gelagert werden, während aber Gefährdungen, vor allem des Grundwassers nicht auszuschließen , oder nur äußerst kostspielig zu vermeiden sind.

Anderseits wurde vorgeschlagen, die Abfallstoffe flüssig bzw. in einer Flüssigkeit aufgeschlämmt, emulgiert oder gelöst, vorzugsweise durch schon bestehende Bohrungen in geologische Formationen einzubringen. Die DE-OS 34 11 998 beschreibt das Einbringen der Abfallstoffe in Salzkavernen und die EP-A-121 577 die Förderung der Abfallstoffe in natürliche oder künstliche Hohlräume ober oder unter Tag, in beiden Fällen gegebenenfalls unter Flüssigkeitszusatz zur Erleichterung der Einbringung. Hiebei muß aber auf die Veränderung der gebirgsmechanischen Eigenschaften durch das Auffüllen der großen Hohlräume geachtet werden, was der Anwendung dieses Verfahrens Grenzen setzt. Überdies ist auch die Gefahr gegeben, daß durch Risse oder ähnliche Veränderungen der die Dichtheit herstellenden Schichten die Sicherheit gegen ein Austreten der Abfallstoffe nicht mehr gewährleistet ist.

Die Aufgabe der Erfindung ist daher ein Verfahren zur Entsorgung zu schaffen, welches die obigen Nachteile vermeidet und in einfacher Weise eine sichere Entsorgung sowohl von inaktiven als auch belasteten Abfallstoffen vorsieht.

Dazu ist erfindungsgemäß vorgesehen, daß die die Abfallstoffe enthaltende Flüssigkeit unter Druck in die Poren oder Spalten geologischer Formationen mit poröser oder zerklüfteter Struktur verpreßt wird, allenfalls unter zusätzlicher Ausnutzung der Saugkraft der geologischen Formation.

Gemäß der Erfindung werden die Abfallstoffe in Poren oder Spalten geologischer Formationen, d.h. in Hohlräume kleiner bis kleinster Dimensionen eingepreßt. Die gebirgsmechanischen Eigenschaften werden durch das Verfahren nicht oder sogar zum Besseren verändert, da die Stabilität der Formation durch das vollständige Auffüllen der Hohlräume nicht verändert, bzw. sogar verbessert wird. Schließlich ist auch die Sicherheit gegen Austreten der Abfallstoffe gegeben, da die Poren oder Spalten eine Rückhalte- bzw. Saugwirkung, ähnlich der eines Schwammes, bewirken.

Weitere vorteilhafte Ausführungsformen werden im Zuge der folgenden detaillierten Beschreibung dargestellt.

Der erste Schritt zur Ausführung des Verfahrens gemäß der Erfindung besteht in der Auswahl einer geeigneten geologischen Formation. Um bei Deponierung giftiger Stoffe keine Verunreinigung des Grundwassers zu verursachen, muß diese Formation in ausreichend großer Tiefe vom unteren Grundwasserhorizont entfernt liegen. Bei inerten Abfallstoffen ist dies nicht unbedingt notwendig. Überdies muß die Gesteinsstruktur derart ausgebildet sein, daß sie Poren oder Spalten bzw. Klüfte aufweist, welche die Abfallstoffe aufnehmen können.

Anschließend wird zumindest eine Bohrung angelegt und als Einpreßsonde ausgeführt. Vorzugsweise werden geologische Formationen ausgewählt, die schon durch Bohrungen erschlossen sind, wobei hier diese schon bestehenden Bohrungen nur mehr zur Verwendung als Einpreßsonde adaptiert werden müssen. Dazu wird in beiden Fällen das Bohrloch entsprechend gründlich abgedichtet, um ein Austreten des einzubringenden Gutes in andere Gesteinsschichten oder gar das Grundwasser zu verhindern.

Bei flüssigen Abfallstoffen bzw. Emulsionen kann die Einbringung durch die Einpreßsonde direkt erfolgen. Jedoch können auch feste Abfallstoffe mittels des erfindungsgemäßen Verfahrens entsorgt werden, indem sie mit einer Flüssigkeit aufgeschlämmt oder in dieser gelöst werden und diese Suspension bzw. Lösung anschließend in die Formation eingeleitet wird.

Bei Partikel - bzw. Agglomeratgrößen der festen Stoffe, die über den Dimensionen der Hohlräume der geologischen Formation liegen, muß dem Aufschlämmen noch eine Vermahlung der Feststoffe bis auf Größen unter der Poren- bzw. Spaltgröße vorangehen.

Da die für das Verfahren geeignete Formationen aber meist mit Salzwasser gefüllt sind, sieht eine vorteil-

2

hafte Variante des erfindungsgemäßen Verfahrens vor, zumindest eine Entlastungsleitung anzulegen, durch die das Lagerstättenwasser austreten kann.

Dies kann sowohl durch eine Ausleitung im Bereich der Einpreßsonde, als auch in der überwiegenden Anzahl der Fälle durch zumindest eine, separat ausgeführte Entlastungssonde geschehen. Im Falle einer Mehrzahl von Entlastungssonden können diese z.B. ringförmig um die Einpreßsonde angelegt werden.

Um die Aufnahme der Abfallstoffe in die Formation zu beschleunigen, bzw. zu erleichtern, kann weiters vorgesehen sein, das Lagerstättenwasser durch zumindest eine der Entlastungssonden aktiv mittels Pumpen abzusaugen.

Die Flüssigkeit mit den Abfallstoffen wird unter Druck in die geologische Formation eingepreßt. Die Höhe des dazu angewendeten Druckes richtet sich nach den jeweiligen Bedingungen in der Formation selbst. Von der Notwendigkeit sehr hoher Einpreßdrücke bei geringer Saugkraft des Gesteines bis hin zur Absenkung des Druckes auf den zum Transport der Flüssigkeit benötigten Wert bei Formationen hoher Saugkraft, sind alle dazwischenliegenden Abstufungen möglich. Dabei kann in allen erwähnten Fällen die oben beschriebene Saughilfe durch aktives Auspumpen allenfalls vorhandenen Lagerstättenwassers erfolgen.

Eine weitere vorteilhafte Ausführungsform des Verfahrens beinhaltet eine Eingliederung des verdrängten bzw. aktiv ausgepumpten Lagerstättenwassers in dem Prozeß. Im Falle der Entsorgung von Feststoffen werden diese vorzugsweise mit Salzwasser aufgeschlämmt und da das Lagerstättenwasser ebenfalls Salzwasser ist, kann dieses im Kreislauf für die weitere Aufschlämmung und als Transportmedium für die festen Abfallstoffe dienen , wodurch einerseits weniger Primärverbrauch an Salzwasser sowie eine minimale zu entsorgende Restmenge erzielt wird.

Anderseits kann bei ausreichender Versorgung mit Salzwasser das Lagerstättenwasser gereinigt und über natürliche Gewässer als Vorfluter abgeführt werden.

Als bevorzugte geologische Formation für das erfindungsgemäße Verfahren bietem sich vorzugsweise aufgelassene Erdgas- bzw. Erdöllagerstätten an. Diese besitzen die notwendige poröse bzw. spaltige Struktur und sind schon durch Bohrungen erschlossen, welche mit geringem Aufwand zu Einpreß- oder Entlastungssonden ausgebaut werden können. Auch liegen sie in einer Tiefe, die weit unterhalb des unteren Grundwasserhorizonts ist, wodurch dessen Gefährdung ausgeschlossen wird, und gestatten dadurch in optimaler Weise die einfache und sichere Entsorgung der Abfallstoffe.

## Patentansprüche

1. Verfahren zur Entsorgung von Abfallstoffen in flüssigem, pulver-, granulat- oder kornförmigem Zustand durch Deponierung in geologischen Formationen, wobei die Abfallstoffe flüssig bzw. in einer Flüssigkeit aufgeschlämmt, emulgiert, oder gelöst vorzugsweise durch schon bestehende Bohrungen eingebracht werden, dadurch gekennzeichnet, daß die, die Abfallstoffe enthaltende Flüssigkeit unter Druck in die Poren oder Spalten geologischer Formationen mit poröser oder zerklüfteter Struktur verpreßt wird, allenfalls unter zusätzlicher Ausnützung der Saugkraft der geologischen Formation.

2. Verfahren nach Anspruch 1, dadurch gekennzeichnet, daß bei Formationen hoher Saugkraft der Verpreßdruck bis auf den zum Transport der Flüssigkeit notwendigen Wert reduziert wird, und die die Abfallstoffe enthaltende Flüssigkeit vom Gestein aufgesaugt und festgehalten wird.

3. Verfahren nach Anspruch 1, dadurch gekennzeichnet, daß feste Abfallstoffe vor dem Aufschlämmen zu Partikeln kleinerer Dimension als jener der Hohlräume der geologischen Formation vermahlen wird.

4. Verfahren nach Anspruch 1, dadurch gekennzeichnet, daß die Abfallstoffe in geologische Formation eingebracht werden, die unter dem unteren Grundwasserhorizont liegen.

## Claims

1. A method of disposing of waste materials in the form of liquid, powder, granules or grains by means of deposition in geological formations, wherein the waste materials are introduced in liquid form or suspended, emulsified or dissolved in a liquid, preferably through already existing bores, characterised in that the liquid containing the waste materials is injected under pressure into the pores or cracks of geological formations with a porous or fissured structure, if need be additionally utilising the suction power of the geological formation.

2. A method according to claim 1, characterised in that in formations with high suction power, the injection pressure is reduced to the value needed to convey the liquid, and the liquid containing the waste materials is absorbed and retained by the rock.

3. A method according to claim 1, characterised in that before being suspended, solid waste materials are ground into particles of a smaller dimension than that of the cavities of the geological formation.

4. A method according to claim 1, characterised in that the waste materials are introduced into geological formations which lie below the lower ground water level.

## Revendications

1. Procédé d'élimination de déchets à l'état liquide, pulvérulent, granulé ou granuleux, par dépôt dans des formations géologiques, les déchets mis en suspension, émulsionnés ou dissous de façon liquide ou dans un liquide étant introduits de préférence par l'intermédiaire de trous déjà existants, caractérisé en ce que le liquide renfermant les déchets est injecté sous pression dans les pores ou les fissures de formations géologiques à structure poreuse ou fracturée, en utilisant, en plus, au besoin, le pouvoir absorbant de la formation géologique.

2. Procédé selon la revendication 1, caractérisé en ce que pour des formations à pouvoir absorbant élevé, la pression d'injection s'élevant jusqu'à la valeur nécessaire pour le transport du liquide, est réduite, et en ce que le liquide renfermant les déchets est absorbé et retenu par la roche.

3. Procédé selon la revendication 1, caractérisé en ce que des déchets solides sont broyés, avant leur mise en suspension, en particules de dimensions inférieures à celle des cavités de la formation géologique.

4. Procédé selon la revendication 1, caractérisé en ce que les déchets sont introduits dans des formations géologiques situées en dessous du niveau inférieur des eaux souterraines.